# EUROPEAN PATENT SPECIFICATION

(11) **EP 3 373 587 B1**
(45) Date of publication and mention of the grant of the patent: **01.09.2021**
(21) Application number: 16861411.3
(22) Date of filing: 30.09.2016
(51) Int. Cl.: H04N 21/231, G11B 27/031, H04N 21/2187, H04N 21/81, H04N 21/2343

(54) **METHOD, APPARATUS, AND SYSTEM FOR SWITCHING VIDEO LIVE STREAM TO VIDEO-ON-DEMAND DATA**
VERFAHREN, VORRICHTUNG UND SYSTEM ZUR UMSCHALTUNG VON VIDEO-LIVE-STREAM- ZU VIDEO-AUF-ANFRAGE-DATEN
PROCÉDÉ, DISPOSITIF ET SYSTÈME DE COMMUTATION D'UN FLUX VIDÉO EN DIRECT SUR DES DONNÉES DE VIDÉO À LA DEMANDE

(30) Priority: 02.11.2015 CN 201510732061
(43) Date of publication of application: 12.09.2018
(73) Proprietor: Tencent Technology (Shenzhen) Company Limited, Shenzhen, Guangdong 518000 (CN)
(72) Inventor: ZHANG, Qiuming, Shenzhen, Guangdong 518000 (CN); YAN, Yaqin, Shenzhen, Guangdong 518000 (CN); WANG, Weifu, Shenzhen, Guangdong 518000 (CN); JIAN, Weihua, Shenzhen, Guangdong 518000 (CN); HU, Xiaohua, Shenzhen, Guangdong 518000 (CN); SHI, Xiaobao, Shenzhen, Guangdong 518000 (CN); CAO, Jiangbo, Shenzhen, Guangdong 518000 (CN); LIU, Qi, Shenzhen, Guangdong 518000 (CN); HE, Guochao, Shenzhen, Guangdong 518000 (CN); ZHANG, Lingxi, Shenzhen, Guangdong 518000 (CN); WANG, Bo, Shenzhen, Guangdong 518000 (CN); TANG, Can, Shenzhen, Guangdong 518000 (CN); GONG, Ming, Shenzhen, Guangdong 518000 (CN); YANG, Shenglai, Shenzhen, Guangdong 518000 (CN); LI, Zhi, Shenzhen, Guangdong 518000 (CN); LIU, Kesong, Shenzhen, Guangdong 518000 (CN); ZHANG, Xiuquan, Shenzhen, Guangdong 518000 (CN)
(74) Representative: Eisenführ Speiser
(86) International application number: PCT/CN2016/101202
(87) International publication number: WO 2017/076143

(56) References cited:
- CN-A- 101 083 756
- CN-A- 102 088 631
- CN-A- 103 179 432
- CN-A- 104 023 245
- CN-A- 105 338 368
- US-A1- 2008 187 279
- US-A1- 2011 314 476

## Description

The present application claims the priority to Chinese Patent Application No. 201510732061.1, titled "METHOD, APPARATUS, AND SYSTEM FOR SWITCHING VIDEO LIVE STREAM TO VIDEO-ON-DEMAND DATA", filed on November 2, 2015 with the State Intellectual Property Office of the People's Republic of China.

### FIELD

The present disclosure relates to the field of computer technology, and particularly to a method, an apparatus and a system for switching from a video live stream to video-on-demand data.

### BACKGROUND

With the development of computer technology, contents of real-time live video are more and more abundant, such as a conference, a superstar concert, sports events or the like. Since users may not have time to watch a live video each time they want to, technicians may switch a video live stream to video-on-demand data to meet the demand of users.

In the conventional technology, in switching from the live video stream to video-on-demand data, the processing of the live video, such as adding an advertisement or adding subtitles to the live video, is performed by local non-linear editing software. When the editing is completed, video-on-demand data of the live video is obtained and uploaded to a server, and thereby users can play the video in a video player after the live time of the video.

It is found that the conventional technology has at least the following problems. When a video live stream is switched to video-on-demand data, the video-on-demand data of the video needs to be uploaded to a server after being edited, which takes a long time, resulting in a low efficiency of switching from a video live stream to video-on-demand data.

In US 2008/187279 A1, an ad in a movie can be a static ad having a position in the movie that cannot be moved, or a dynamic ad having a position in the movie that can be changed. When a viewer of the movie wishes to skip a portion of the movie containing the ad, the playback system determines whether the ad is static or dynamic. If the ad is static, then only the portion of the movie preceding the static ad can be skipped, that is, the ad is unskippable; this technique is referred to as "bounceback", since the end of the skip bounces back to the start of the static ad. If the ad is dynamic, then the ad is moved to after the end of the skip; this technique is referred to as "slip-ad", since the ad slips to later in the movie. When a movie has multiple ads, some can be static and some can be dynamic.

### SUMMARY

The present disclosure provides a method for switching from a video live stream to video-on-demand data, to solve the problem in the conventional technology.

In an aspect, the present disclosure provides a method for switching from a video live stream to video-on-demand data applied in a server. The method includes:
receiving, by the server, a video acquisition request for a target video sent by a terminal;
acquiring, by the server, video data of the target video from a live stream of the target video in response to the video acquisition request, and storing the acquired video data of the target video;
performing, by the server, non-linear editing on the video data of the target video in response to a video editing request when the video editing request for the target video sent by the terminal is received; and
storing the edited video data as video-on-demand data of the target video, wherein the method further includes:
   transcoding, by the server, the video data of the target video to obtain low code-rate video data, and sending the low code-rate video data to the terminal,
   and wherein the performing, by the server, non-linear editing on the video data of the target video in response to a video editing request when the video editing request for the target video sent by the terminal is received includes:
      performing, by the server, non-linear editing on the low code-rate video data in response to the video editing request when the video editing request for the target video sent by the terminal is received; and
      sending the edited low code-rate video data to the terminal.

Preferably, the transcoding, by the server, the video data of the target video to obtain low code-rate video data, and sending the low code-rate video data to the terminal includes: splitting, by the server, the acquired video data of the target video based on a preset duration during the process of acquiring video data of the target video, and transcoding split video data to obtain a low code-rate video data segment, and sending the low code-rate video data segment to the terminal.

Preferably, after the sending, by the server, the edited low code-rate video data to the terminal, the method further includes: performing, by the server, non-linear editing on the video data of the target video based on all non-linear editing performed on the low code-rate video data when an editing completion request for the target video sent by the terminal is received.

Preferably, the performing non-linear editing on the video data includes:
performing, by the server, a cutting process on the video data according to a cutting start time point and a cutting end time point carried in a cutting request, if the video editing request received from the terminal comprises the video cutting request for the target video;
performing, by the server, a video inserting process on the video data according to an inserting time point and inserted content information carried in a video inserting request, if the video editing request received from the terminal comprises the video inserting request for the target video;
performing, by the server, an upper layer picture adding process on the video data according to adding location information and added picture content information carried in an upper layer picture adding request, if the video editing request received from the terminal comprises the upper layer picture adding request for the target video; and
performing, by the server, a partial blurring process on the video data according to blurring location information carried in a partial blurring request, if the video editing request received from the terminal comprises the partial blurring request for the target video.

In another aspect, the present disclosure also provides a method for switching from a video live stream to video-on-demand data applied in a terminal. The method includes:
sending, by the terminal, a video acquisition request for a target video to a server, where the server acquires video data of the target video from a live stream of the target video in response to the video acquisition request and stores the acquired video data of the target video; and
sending, by the terminal, a video editing request for the target video to the server when an inputted video editing instruction is detected by the terminal, where the server performs non-linear editing on the video data of the target video in response to the video editing request and stores the edited video data as video-on-demand data of the target video,
wherein the method further includes: receiving, by the terminal, low code-rate video data of the target video sent by the server, and playing the low code-rate video data,
wherein the sending, by the terminal, a video editing request for the target video to the server when an inputted video editing instruction is detected by the terminal includes: sending, by the terminal, the video editing request for the target video to the server when the terminal detects the video editing instruction triggered by an operation performed on the low code-rate video data.

Preferably, the method further includes: receiving edited low code-rate video data sent by the server and playing the edited low code-rate video data; and sending an editing completion request for the target video to the server when an inputted editing completion instruction is detected by the terminal.

Preferably, the method further includes: receiving, by the terminal, low code-rate video data of the target video sent by the server, editing the received low code-rate video data, recording operation information of non-linear editing and related information corresponding to each piece of the operating information, and sending the video editing request for the target video to the server.

Preferably, a target video identifier, operating information of all non-linear editing of low code-rate video data and corresponding related information recorded by a terminal are carried in the video editing request, where the server analyzes the video editing request received from the terminal and performs non-linear editing on the video data of the target video.

In another aspect, the present disclosure also provides a system for switching from a video live stream to video-on-demand data. The system includes a server and a terminal. The terminal is configured to send a video acquisition request for a target video to the server, and send a video editing request for the target video to the server. The server is configured to: receive the video acquisition request for the target video sent by the terminal, acquire video data of the target video from a live stream of the target video in response to the video acquisition request, store the acquired video data of the target video, perform non-linear editing on the video data of the target video in response to the video editing request when the video editing request for the target video sent by the terminal is received, and store the edited video data as video-on-demand data of the target video.

In another aspect, the present disclosure also provides a server for switching from a video live stream to video-on-demand data. The server includes:
a receiving module, configured to receive a video acquisition request for a target video sent by a terminal;
an acquiring module, configured to acquire video data of the target video from a live stream of the target video in response to the video acquisition request;
an editing module, configured to perform non-linear editing on the video data of the target vide in response to a video editing request when the video editing request for the target video sent by the terminal is received through a receiving module; and
a storing module, configured to store the video data of the target video acquired by the acquiring module and store the edited video data as video-on-demand data of the target video, wherein the server further includes:
   a transcoding module, configured to transcode the video data of the target video to obtain low code-rate video data and send the low code-rate video data to the terminal,
   wherein the editing module is further configured to perform non-linear editing on the low code-rate video data in response to the video editing request when the video editing request for the target video sent by the terminal is received, and send the edited low code-rate video data to the terminal.

In embodiments of the present disclosure, a terminal sends a video acquisition request for a target video to a server. The server acquires video data of the target video from a live stream of the target video in response to the video acquisition request, and stores the acquired target video data. The terminal sends a video editing request for the target video to the server. The server performs non-linear editing on the video data of the target video in response to the video editing request, and stores the edited video data as video-on-demand data of the target video. Therefore, in switching from a video live stream to video-on-demand data, editing process is performed by the server, and thus video-on-demand data needs not to be uploaded to the server by the terminal, thereby saving the time of uploading video-on-demand data to a server and improving the efficiency of switching from a video live stream to video-on-demand data.

### BRIEF DESCRIPTION OF THE DRAWINGS

The accompanying drawings to be used in the description of the embodiments are described briefly as follows, so that the technical solutions according to the embodiments in the present disclosure become clearer. It is apparent that the accompanying drawings in the following description only illustrate some embodiments of the invention. For those skilled in the art, other drawings may be obtained based on these accompanying drawings without any creative work.
Figure 1 is a flow chart of a method for switching from a video live stream to video-on-demand data provided in an embodiment of the present disclosure;
Figure 2 is a flow chart of a method for switching from a video live stream to video-on-demand data provided in an embodiment of the present disclosure;
Figure 3 is a flow chart of a method for switching from a video live stream to video-on-demand data provided in an embodiment of the present disclosure;
Figure 4 is a block diagram of a system for switching from a video live stream to video-on-demand data provided in an embodiment of the present disclosure;
Figure 5 is schematic diagram illustrating the operation of switching from a video live stream to video-on-demand data provided in an embodiment of the present disclosure;
Figure 6 is a block diagram of a system for switching from a video live stream to video-on-demand data provided in an embodiment of the present disclosure;
Figure 7 is a structural diagram of a server provided in an embodiment of the present disclosure;
Figure 8 is a structural diagram of a server provided in an embodiment of the present disclosure;
Figure 9 is a structural diagram of a server provided in an embodiment of the present disclosure;
Figure 10 is a structural diagram of a server provided in an embodiment of the present disclosure;
Figure 11 is a structural diagram of a terminal provided in an embodiment of the present disclosure;
Figure 12 is a structural diagram of a terminal provided in an embodiment of the present disclosure;
Figure 13 is a structural diagram of a server provided in an embodiment of the present disclosure; and
Figure 14 is a structural diagram of a terminal provided in an embodiment of the present disclosure.

### DETAILED DESCRIPTION OF EMBODIMENTS

The purposes, technical solutions and advantages of the present disclosure will be described below clearly with reference to the drawings in the embodiments of the disclosure.

### First Embodiment, not part of the invention.

Provided in an embodiment of the present disclosure is a method for switching from a video live stream to video-on-demand data. The method may be implemented by a terminal and a server together. The terminal may be a terminal having the capability of video editing control, which is installed with an application used for playing and editing a video. The server may be a background server of a video website or a video application.

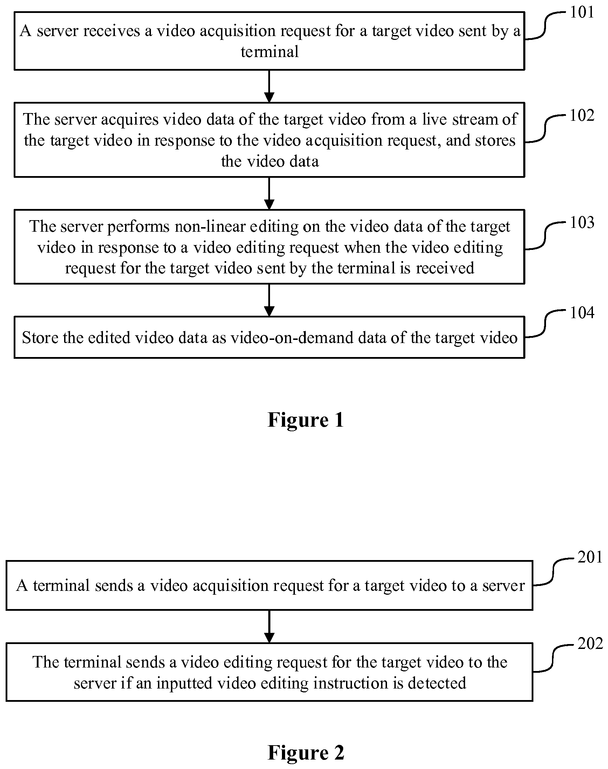

As shown in Figure 1, a processing flow of a server in the method may include the following steps 101-104.

In step 101, a server receives a video acquisition request for a target video sent by a terminal.

In step 102, the server acquires video data of the target video from a live stream of the target video in response to the video acquisition request, and stores the acquired video data of the target video.

In step 103, the server performs non-linear editing on the video data of the target video in response to a video editing request when the video editing request for the target video sent by the terminal is received.

In step 104, the edited video data is stored as video-on-demand data of the target video.

As shown in Figure 2, a processing flow of a terminal in the method may include the following steps 201-202.

In step 201, a terminal sends a video acquisition request for a target video to a server, such that the server acquires video data of the target video from a live stream of the target video in response to the video acquisition request and stores the acquired video data of the target video.

In step 202, the terminal sends a video editing request for a target video to a server when an inputted video editing instruction is detected by the terminal, such that the server performs non-linear editing on the video data of the target video in response to the video editing request and stores the edited video data as video-on-demand data of the target video.

In the embodiment of the present disclosure, a terminal sends a video acquisition request for a target video to a server; the server acquires video data of the target video from a live stream of the target video in response to the video acquisition request, and stores the acquired target video data; the terminal sends a video editing request for the target video to the server; the server performs non-linear editing on the video data of the target video in response to the video editing request; and the server stores the edited video data as video-on-demand data of the target video. Therefore, for switching from a video live stream to video-on-demand data, the editing process is performed by the server, and thus the video-on-demand data needs not to be uploaded to the server by the terminal, thereby saving the time of uploading video-on-demand data to a server and improving the efficiency of switching from a video live stream to video-on-demand data.

### Second Embodiment

Provided in an embodiment of the present disclosure is a method for switching from a video live stream to video-on-demand data. The method is executed by a terminal and a server together. The terminal may be a terminal having the capability of video editing control, which is installed with an application used for playing and editing a video. The server may be a background server of a video website or a video application. A processor, a memory, a transceiver or the like may be arranged in the terminal. The processor is configured to process the procedure of switching from a video live stream to video-on-demand data. The memory is configured to store data required and generated during the procedure. The transceiver is configured to receive and send video data and a related control message. A screen, a keyboard, a mouse and other input/output devices may also be arranged in the terminal. The screen is configured to display an interface of an application, a video, etc. The mouse and keyboard are configured to input an instruction by technicians.

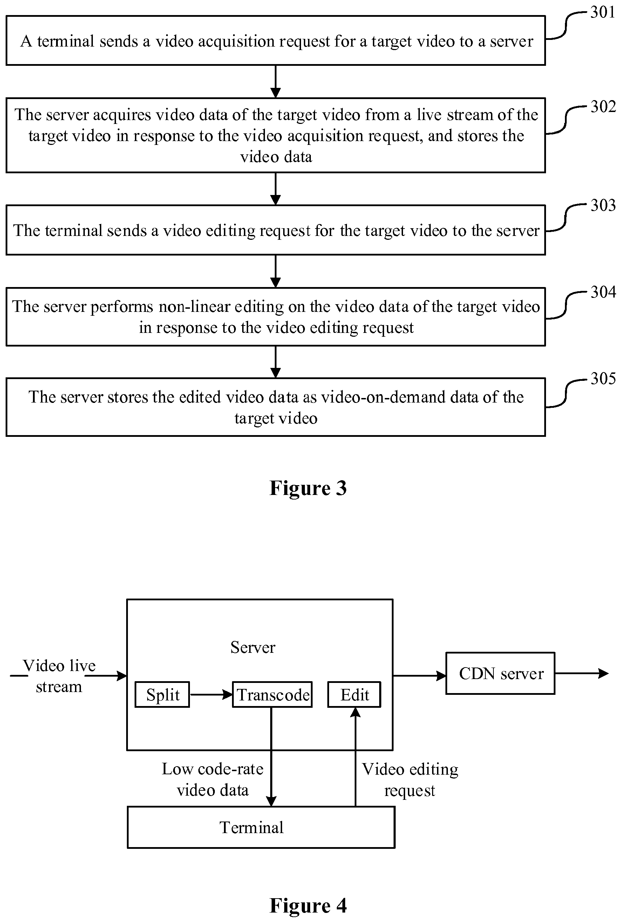

The flowchart shown in Figure 3 will be described clearly in conjunction with specific implementations hereinafter.

In step 301, a terminal sends a video acquisition request for a target video to a server.

In an implementation, if a technician wants to edit a live video (target video), he may open an application used for editing a video or a login interface of a website for editing a video before the live video is started, input an applied account and a password, and click the confirm button to display the application or main interface of the website. A live program list (a list of live program broadcasted now and a list of live program list to be broadcasted may be included), a live access button and other options are shown in a main interface. The live access button is used to trigger a video acquisition request to be sent to a server.

If a technician wants to edit a target video, he may click an option corresponding to the target video to be edited in a live program list, and click the live access button to trigger the terminal to send a video acquisition request for the target video to the server. A target video identifier is carried in the video acquisition request.

In step 302, the server acquires video data of the target video from a live stream of the target video in response to the video acquisition request, and stores the acquired video data of the target video.

In an implementation, when the video acquisition request is received by the server, the server may send an access request to a server that records the target video. When the server receives an access completion message returned by the server that records the target video, the server receives a live stream of the target video and acquires video data of the target video from the live stream when the live broadcast is started. During the process of acquiring video data of the target video, if the live stream of the target video is an analog signal, the acquired analog signal is converted to a digital signal, from which the video data is acquired and stored.

The server provides low code-rate video data of the target video for the terminal, which may include that the server transcodes the video data of the target video to obtain low code-rate video data and sends it to the terminal.

In an implementation, a preset code rate of transcoding, 256kpbs for example may be preset in the server. After acquiring the video data of the target video, the server may transcode the video data of the target video to low code-rate video data according to the preset code rate, store the low code-rate video data and send it to the terminal for being previewed and edited by a technician.

Optionally, the server may transcode the video data in real time to obtain low code-rate video data and send it to the terminal during the process of acquiring the target video, which may include that during the process of acquiring the video data of the target video, the server splits the video data at a time point corresponding to a preset duration each time it acquires video data with the preset duration, and transcodes the split video data to obtain a low code-rate video data segment, and sends the segment to a terminal.

In an implementation, as shown in Figure 4, a segment duration (i.e. the preset duration), such as 5 seconds, 10 seconds, may be preset in the server. During the process of acquiring video data of the target video, the server performs segment split on video data at time point corresponding to the preset duration each time it acquires video data with the preset duration, and creates an index according to a name of the segment. Each time a segment is split from video data, the split segment is transcoded to a low code-rate video data segment and sent to the terminal. The preset duration may be set through the application as 8 seconds for example. The name of each segment may be a standard timestamp of the segment, that is, a start time point and an end time point of the segment in the total duration of the target video. The index is used for searching for a corresponding segment of the video.

As an example, the server may also transcode the video data of the target video to obtain low code-rate video data and send it to the terminal during the process of acquiring target video in the following ways. During the process of acquiring the video data of the target video, the server transcodes the acquired video data of the target video to obtain low code-rate video data. The server splits the low code-rate video data at a time point corresponding to the preset duration each time the server transcodes low code-rate video data with the preset duration. The server sends the currently split segment of the low code-rate video data to the terminal.

In step 303, the terminal sends a video editing request for the target video to the server.

In an implementation, if a technician wants to perform editing on the target video, corresponding editing operation may be performed through the application to trigger the terminal to send a video editing request for the target video to the server. The video editing request may be an inserting request, a cutting request, an upper layer picture adding request, etc. Corresponding operation information may be carried in the video editing request, such as video inserting data, video cutting data, a to-be-added upper layer picture, etc.

The editing of target video data is realized by editing low code-rate video data, which includes that the terminal receives low code-rate video data of the target video sent by the server and plays the low code-rate video data, sends a video editing request for the target video to the server when detecting a video editing instruction trigger by an operation performed on the low code-rate video data.

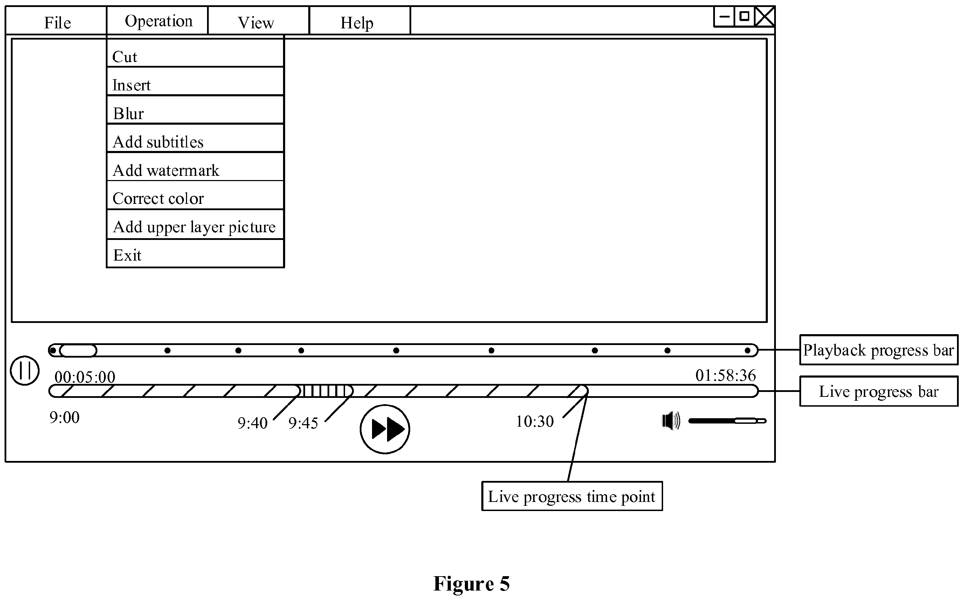

In an implementation, as shown in Figure 5, after receiving low code-rate video data, the terminal plays the video data. In an interface of playing the video data, pictures of the video data and a playback progress bar corresponding to the video data are displayed, also displayed in the interface are an "insert" button, a "cut" button, an "add upper layer picture" button and some other operation buttons. For operating easily, a function of zooming in may be provided for a playback progress bar. That is, when a mouse moves closely to the playback progress bar, displayed contents in a circular region, which has a center as the mouse location and a preset radius, may be zoomed in. When a mouse moves to a point on the playback progress bar, the terminal may be triggered to display an image frame of a time point corresponding to the point. Additionally, a live progress bar may also be displayed in the interface, and a live video start time point and a live video progress time point may be shown in the live progress bar. The live video start time point may be an actual time point of starting a live video. The live video progress time point may be an actual time point when the live video is played currently, and it may be an actual time point corresponding to an end time point of the last segment received by the terminal. For example, if there is a live football match during 9:00-11:00 and the live video is played to 9:40 now, then the live video start time point is 9:00 and the live video progress time point is 9:40. The live progress bar may be used for marking a time interval with video data and a time interval without video data of a target video. For example, if there is a live football match during 9:00-11:00 and the live video is interrupted during 9:40-9:45, then the section of the live progress bar corresponding to the time interval of 9:40-9:45 will be shown as no video data. If a technician wants to watch a frame at a time point on the live progress bar, he can move the mouse to the time point on the live progress bar, to trigger the terminal to display an image frame at the time point.

If the low code-rate video data needs to be cut by a technician, the "cut" button may be clicked to trigger a corresponding dialog box. A cutting start time point and a cutting end time point are selected in the dialog box. Then the "confirm" button is clicked, thereby triggering the terminal to create a video editing request carrying the cutting start time point, cutting end time point inputted by a technician and a target video identifier. Afterwards, the video editing request for the target video is sent to the server.

If a technician wants to insert video data into the low code-rate video data, the "insert" button may be clicked to trigger a corresponding dialog box. An inserting time point and inserted content information are selected in the dialog box. Then the "confirm" button is clicked, thereby triggering the terminal to create a video editing request carrying the inserting time point, inserted content information inputted by the technician and a target video identifier. Afterwards, the video editing request for the target video is sent to the server.

If a technician wants to add an upper layer picture to the low code-rate video data, the "upper layer picture" button may be clicked to trigger a corresponding dialog box. Adding location information and added picture content information are selected in the dialog box. Then the "confirm" button is clicked, thereby triggering the terminal to create a video editing request carrying the adding location information, added picture content information inputted by the technician and a target video identifier. Afterwards, the video editing request for the target video is sent to the server.

In step 304, the server performs non-linear editing on the video data of the target video in response to the video editing request.

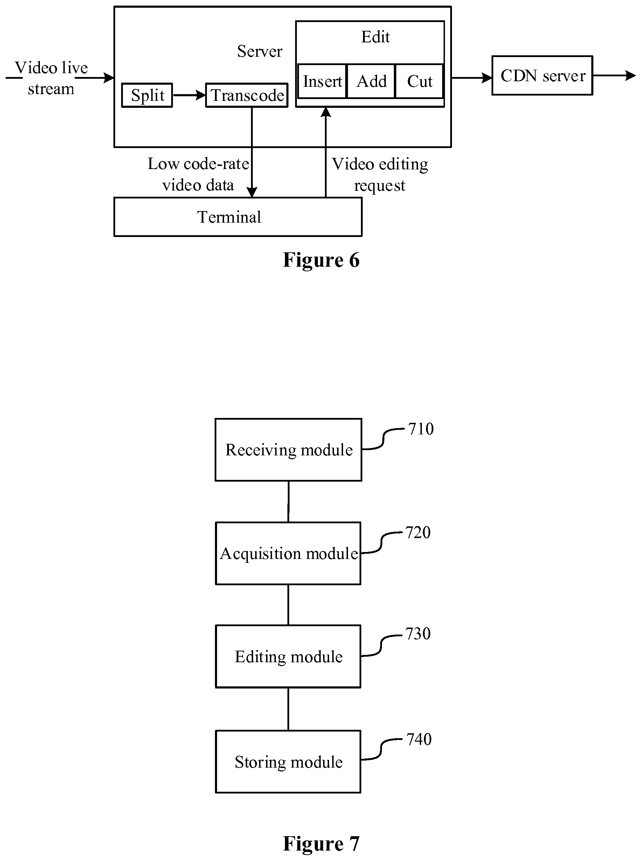

In an implementation, as shown in Figure 6, after receiving the video editing request, the server may analyze the video editing request to acquire a target video identifier and operation information, acquire video data of the target video corresponding to the target video identifier, and perform non-linear editing on the video data of the target video according to the operation information.

Optionally, non-linear editing may be performed on low code-rate video data stored in the server in response to a request from the terminal. That is, the server performs non-linear editing on low code-rate video data in response to a video editing request when the video editing request for the target video sent by the terminal is received.

In an implementation, when the server receives a video editing request for the target video sent by the terminal, the server may analyze the video editing request to acquire a target video identifier and operation information, acquire video data of the target video corresponding to the target video identifier, and perform non-linear editing on low code-rate video data according to the operation information. Edited low code-rate video data may be sent to the terminal after non-linear editing is performed on the low code-rate video data by the server.

Optionally, there are many ways to perform non-linear editing on the video data of the target video by the server in response to the video editing request, such as cutting, inserting a video, adding an upper layer picture, partial blurring, etc. It should be noted that, the editing operation described below is performed on video data of a target video. However, those skilled in the field should understand that, the editing operation may also be performed on low code-rate video data if required.

As an example, if the video editing request received from the terminal includes a video cutting request for the target video, the server performs a cutting process on video data of the target video according to a cutting start time point and a cutting end time point carried in the cutting request. As an example, the server may analyze the cutting request to obtain a target video identifier, a cutting start time point and a cutting end time point, acquire video data of the target video according to the target video identifier, cut off a part from the cutting start time point to the cutting end time point in the video data of the target video according to the cutting start time point and the cutting end time point, and store cut video data after completing the cutting process. As an example, if the video editing request received from the terminal includes a video inserting request for the target video, the server performs a video inserting process on video data of the target video according to an inserting time point and inserted content information carried in the video inserting request. As an example, a server may analyze the inserting request to obtain a target video identifier, an inserting time point and inserted content information, acquire video data of a target video according to the target video identifier, insert corresponding contents to video data of the target video according to the inserting time point and the inserted content information, and store the processed video data after completing the inserting process.

As an example, if the video editing request received from the terminal includes an upper layer picture adding request for the target video, the server performs an upper layer picture adding process on video data according to the adding location information and added picture content information carried in the upper layer picture adding request. As an example, the server may analyze the upper layer picture adding request to obtain a target video identifier, added picture content information and adding location information, acquire video data of the target video according to the target video identifier, perform the process of adding an upper layer picture on video data of the target video according to the adding location information and the added picture content information; and store the processed video data after completing the process of adding an upper layer picture.

As an example, if the video editing request received from the terminal includes a partial blurring request for the target video, the server performs a partial blurring process on the video data according to blurring location information carried in the partial blurring request. As an example, the server may analyze the blurring request to obtain a target video identifier and blurring location information, acquire video data of the target video according to the target video identifier, perform the partial blurring process on video data of the target video according to the blurring location information, and store the processed video data after completing the blurring process.

Optionally, non-linearly edited low code-rate video data may be displayed on the terminal, and a technician may operate the terminal to complete the editing of the target video. That is, the terminal receives edited low code-rate video data sent by the server, plays the edited low code-rate video data, and sends an editing completion request for the target video to the server when an inputted editing completion instruction is detected by the terminal. Correspondingly, the procedure on the server side includes that the server performs non-linear editing on the video data of the target video based on all non-linear editing performed on the low code-rate video data when an editing completion request for the target video sent by the terminal is received.

In an implementation, after receiving edited low code-rate video data sent by the server, the terminal plays the low code-rate video data automatically. Operation information of all performed editing may be shown on a playback progress bar when the low code-rate video data is played. As an example, after the low code-rate video data is edited, a technician may click the editing completion button shown on the interface to trigger an editing completion request for the target video to be sent to a server. When receiving the editing completion request for the target video sent by the terminal, the server may analyze the edited completion request and acquire a target video identifier carried in it. Video data of the target video is acquired according to the target video identifier, and all non-linear editing information of the low code-rate video data of the target video is also acquired. According to all the non-linear editing performed on the low code-rate video data, the same non-linear editing is performed on video data of the target video. While the same non-linear editing is performed on the video data of the target video by the server, the server sends a non-linear editing state to the terminal, which is shown on an interface of the terminal in a form of dialog box. The time required to complete all the non-linear editing and the current progress of non-linear editing are displayed in the dialog box of the editing state.

Steps 303 and 304 may be implemented in another way, which is described in the following.

When the low code-rate video data is edited on the terminal, the terminal may record all non-linear editing operation information and related information (for example, a cutting start time point and a cutting end time point, an inserting time point and inserted content information, adding location information and added picture content information, etc.) corresponding to each piece of operation information during the process of editing. When the editing is completed, a technician may preview edited low code-rate video data, and click the editing completion button shown on the interface to trigger the terminal to send a video editing request for the target video to the server. Carried in the video editing request are a target video identifier, operation information of all non-linear editing of the low code-rate video data and corresponding related information recorded by the terminal. When receiving the video editing request for the target video sent by the terminal, the server may analyze the video editing request; acquire the target video identifier, the operation information of all non-linear editing of the low code-rate video data and corresponding related information carried in it, and perform the same non-linear editing on the video data of the target video according to the target video identifier, the operation information of all non-linear editing of the low code-rate video data and the corresponding related information.

In step 305, the server stores the edited video data as video-on-demand data of the target video.

As an example, after performing non-linear editing on the video data of the target video, the server may determine whether the edited video data needs to be transcoded, to 1024kbps or 512kbps data for example, according to preset transcoding information. If transcoding is needed, the whole video data is split into video segments with a same duration (10 minutes for example) to be sent to multiple transcoders respectively. After the transcoding is completed, the transcoders send the transcoded video segments to the server. When the transcoded video segments are received, the server combines the transcoded video segments into transcoded video data of the target video in chronological order. The transcoded video data of the target video is stored as video-on-demand data of the target video, and sent to a content delivery network (abbreviated as CDN) server for users to access.

In the embodiment of the present disclosure, a terminal sends a video acquisition request for a target video to a server. The server acquires video data of the target video from a live stream of the target video in response to the video acquisition request, and stores the acquired target video data. The terminal sends a video editing request for the target video to the server. The server performs non-linear editing on the video data of the target video in response to the video editing request and stores the edited video data as video-on-demand data of the target video. Therefore, in switch a video live stream to video-on-demand data, editing process is performed by the server, and thus video-on-demand data needs not to be uploaded to the server by the terminal, thereby saving the time of uploading video-on-demand data to a server and improving the efficiency of switching from a video live stream to video-on-demand data.

### Third Embodiment

Based on the same technical concept, the present disclosure further provides a server as shown in Figure 7. The server includes: a receiving module 710, an acquisition module 720, an editing module 730 and a storing module 740.

The receiving module 710 is configured to receive a video acquisition request for a target video sent by a terminal.

The acquiring module 720 is configured to acquire video data of the target video from a live stream of the target video in response to the video acquisition request, to store the acquired video data of the target video in the storing module 740.

The editing module 730 is configured to perform non-linear editing on the video data of the target video in response to a video editing request when the video editing request for the target video sent by the terminal is received.

The storing module 740 is configured to store the video data of the target video acquired by the acquiring module 720, and store the edited video data as video-on-demand data of the target video.

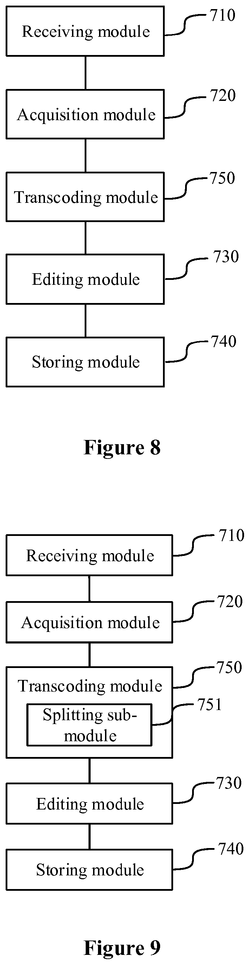

Optionally, as shown in Figure 8, the server further includes: a transcoding module 750, configured to transcode the video data of the target video to obtain low code-rate video data, and send the low code-rate video data to the terminal.

Optionally, as shown in Figure 9, the transcoding module 750 includes a splitting sub-module 751. The splitting sub-module 751 is configured to split the video data at a time point corresponding to the preset duration each time the server acquires video data with the preset duration during the process of acquiring video data of the target video, transcode currently split video data to obtain a low code-rate video data segment, and send the low code-rate video data segment to the terminal.

As an example, the transcoding module 750 may transcode the video data of the target video to obtain low code-rate video data and send it to the terminal in another way described in the following. During the process of acquiring video data of the target video, the acquired video data of the target video is transcoded to obtain low code-rate video data. Each time low code-rate video data with a preset duration is transcoded, the low code-rate video data is split at a time point corresponding to the preset duration. The currently spit low code-rate video data segment is sent to the terminal.

As an example, when the server receives a video editing request for the target video sent by the terminal, the editing module 730 performs non-linear editing on the low code-rate video data in response to the video editing request, and sends the edited low code-rate video data to the terminal. When the server receives an editing completion request for the target video sent by the terminal, the server performs non-linear editing on the video data of the target video based on all non-linear editing performed on the low code-rate video data.

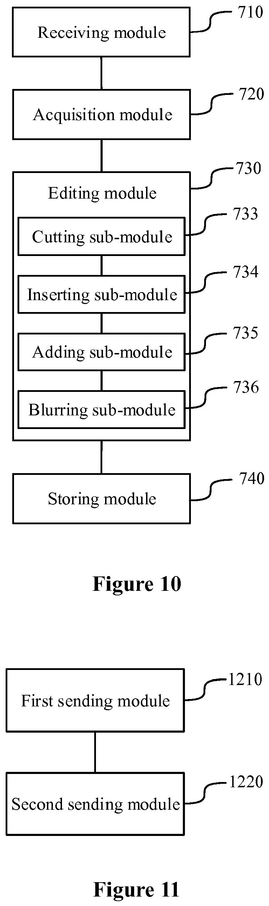

Optionally, as shown in Figure 10, the editing module 730 includes: a cutting sub-module 733, an inserting module 734, an adding module 735 and a blurring module 736.

The cutting sub-module 733 is configured to: perform a cutting process on the video data of the target video according to a cutting start time point and a cutting end time point carried in a cutting request, if the cutting request for the target video sent by the terminal is received.

The inserting module 734 is configured to: perform a video inserting process on the video data of the target video according to an inserting time point and inserted content information carried in a video inserting request, if the video inserting request for the target video sent by the terminal is received.

The adding module 735 is configured to: perform an upper layer picture adding process on the video data of the target video according to the adding location information and added picture content information carried in an upper layer picture adding request, if the upper layer picture adding request for the target video sent by the terminal is received.

The blurring module 736 is configured to: perform a partial blurring process on the video data of the target video according to blurring location information carried in a partial blurring request, if the partial blurring request for the target video sent by the terminal is received.

It should be noted that, the operation mentioned above is performed on video data of a target video. However, those skilled in the field should understand that, the editing operation may also be performed on low code-rate video data if required.

In the embodiment of the present disclosure, a terminal sends a video acquisition request for a target video to a server. The server acquires video data of the target video from a live stream of the target video in response to the video acquisition request, and stores the acquired target video data. The terminal sends a video editing request for the target video to the server. The server performs non-linear editing on the video data of the target video in response to the video editing request, and stores the edited video data as video-on-demand data of the target video. Therefore, in switching from a video live stream to video-on-demand data, editing process is performed by the server, and thus video-on-demand data needs not to be uploaded to the server by the terminal, thereby saving the time of uploading video-on-demand data to a server and improving the efficiency of switching from a video live stream to video-on-demand data.

It should be noted that, all the functional modules of the server for switching from a video live stream to video-on-demand data provided in the above embodiment are divided just for illustration. In actual applications, the functions may be achieved by different functional modules as required. That is, an internal structure of the server may be divided into different functional modules to complete all or a part of functions described above. Additionally, the embodiments of the server for switching from a video live stream to video-on-demand data provided in the above embodiment has the same concept as the embodiments of the method for switching from a video live stream to video-on-demand data, thus will not be described hereinafter for simplicity.

### Fourth Embodiment

Based on the same technical concept, the embodiment of the present disclosure also provides a terminal as shown in Figure 11. The terminal includes: a first sending module 1210 and a second sending module 1220.

The first sending module 1210 is configured to send a video acquisition request for a target video to a server, such that the server acquires video data of the target video from a live stream of the target video in response to the video acquisition request and stores the acquired video data of the target video. The second sending module 1220 is configured to send a video editing request for the target video to the server when an inputted video editing instruction is detected, such that the server performs non-linear editing on the video data of the target video in response to the video editing request and stores the edited video data as video-on-demand data of the target video.

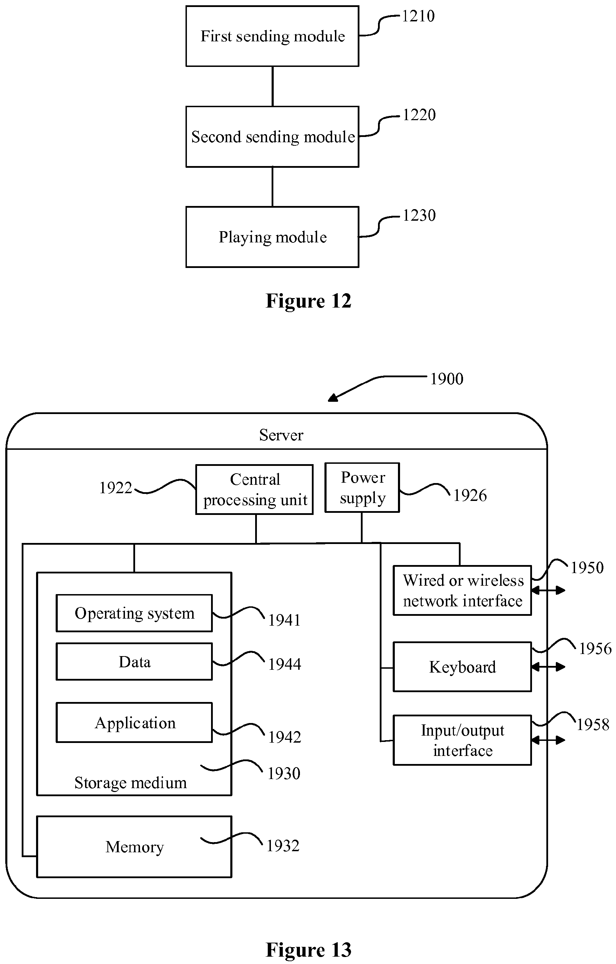

Optionally, as shown in Figure 12, the terminal also includes a playing module 1230. The playing module 1230 is configured to: receive low code-rate video data of the target video sent by the server and play the low code-rate video data. In this case, the second sending module 1220 is configured to: send a video editing request for the target video to the server when a video editing instruction triggered by an operation performed on the low code-rate video data is detected.

Optionally, as an example, the playing module 1230 also receives edited low code-rate video data sent by the server and plays the edited low code-rate video data.

The second sending module 1220 is further configured to send an editing completion request for the target video to the server when an inputted editing completion instruction is detected.

In the embodiment of the present disclosure, a terminal sends a video acquisition request for a target video to a server. The server acquires video data of the target video from a live stream of the target video in response to the video acquisition request, and stores the acquired target video data; the terminal sends a video editing request for the target video to the server. The server performs non-linear editing on the video data of the target video in response to the video editing request, and stores the edited video data as video-on-demand data of the target video. Therefore, in switching from a video live stream to video-on-demand data, editing process is performed by the server, and thus video-on-demand data needs not to be uploaded to the server by the terminal, thereby saving the time of uploading video-on-demand data to a server and improving the efficiency of switching from a video live stream to video-on-demand data.

For another example, low code-rate video data may be edited on the terminal. In this case, the playing module 1230 may also perform editing operation on the received low code-rate video data, and record all non-linear editing operation information and related information (for example, a cutting start time point and a cutting end time point, an inserting time point and inserted content information, adding location information and added picture content information, etc.) corresponding to each piece of operation information. When the editing is completed, a technician may preview the edited low code-rate video data, and click the editing completion button shown on the interface to trigger the terminal to send a video editing request for the target video to the server. The video editing request is sent to the server by the second sending module 1220, and includes a target video identifier, operation information of all non-linear editing of low code-rate video data and corresponding related information recorded by the terminal. When the server receives the video editing request for the target video sent by the terminal, the editing module 730 in the server may analyze the video editing request to acquire the target video identifier, the operation information of all non-linear editing of low code-rate video data and corresponding related information carried in it, and perform the same non-linear editing on the video data of the target video according to the target video identifier, the operation information of all non-linear editing of low code-rate video data and corresponding related information.

### Fifth Embodiment

Based on the same technical concept, the embodiment of the present disclosure also provides a system for switching from a video live stream to video-on-demand data. The system includes a server and a terminal.

The terminal is configured to send a video acquisition request for a target video to the terminal, and send a video editing request for the target video to the server when an inputted video editing instruction is detected.

The server is configured to receive the video acquisition request for the target video sent by the terminal, acquire video data of the target video from a live stream of the target video in response to the video acquisition request, and store the acquired target video data; perform non-linear editing on the video data of the target video in response to the video editing request when the video editing request for the target video sent by the terminal is received, and store the edited video data as video-on-demand of the target video.

In the embodiment of the present disclosure, a terminal sends a video acquisition request for a target video to a server. The server acquires video data of the target video from a live stream of the target video in response to the video acquisition request, and stores the acquired target video data. The terminal sends a video editing request for the target video to the server. The server performs non-linear editing on the video data of the target video in response to the video editing request and stores the edited video data as video-on-demand data of the target video. Therefore, in switching from a video live stream to video-on-demand data, editing process is performed by the server, and thus video-on-demand data needs not to be uploaded to the server by the terminal, thereby saving the time of uploading video-on-demand data to a server and improving the efficiency of switching from a video live stream to video-on-demand data.

### Sixth Embodiment

A structural diagram of a server provided in the embodiment of the present disclosure is shown in Figure 13. The server 1900 may be quite different in configurations and performance. The server 1900 may include one or more central processing units (abbreviated as CPU) 1922 (one or more processors for example) and memories 1932, and one or more storage medium 1930 (one or more mass storage devices for example) for storing applications 1942 data 1944. The memory 1932 and storage medium 1930 may be used for temporary storage or persistent storage. Applications stored in storage medium 1930 may include one or more modules (not shown in the figure), and each of the modules may include a series of instructions in the server. Moreover, the central processing unit 1922 may be communicated with the storage medium 1930, to execute the series of instructions in the storage medium 1930 on the server 1900.

The server 1900 may also include one or more power supplies 1926, one or more wired or wireless network interfaces 1950, one or more input/output interfaces 1958, one or more keyboards 1956, and/or one or more operating systems 1941, such as Windows Server™, Mac OSX™, Unix™, Linux™, FreeBSD™, etc.

The server 1900 may include a memory and one or more programs. The one or more programs are stored in the memory, and are executed by one or more processors to perform a process including the following operations:
receiving a video acquisition request for a target video sent by a terminal;
acquiring video data of the target video from a live stream of the target video in response to the video acquisition request, and storing the acquired video data of a target video;
performing, by the server, non-linear editing on the video data of the target video in response to a video editing request, if the video editing request for the target video sent by the terminal is received; and
storing the edited video data as video-on-demand data of the target vide

Optionally, the process further includes: transcoding, by the server, video data of the target video to obtain low code-rate video data, and sending it to the terminal.

Optionally, the transcoding, by the server, video data of the target video to obtain low code-rate video data, and sending it to the terminal includes:
transcoding, by the server, video data of the target video to obtain low code-rate video data during the process of acquiring target video; and
splitting, by the server, the low code-rate video data at a time point corresponding to a preset duration each time the server obtains low code-rate video data with the preset duration by transcoding; and sending the split low code-rate video data segment to the terminal.

As another example, the transcoding, by the server, video data of the target video to obtain low code-rate video data, and sending it to the terminal includes:
splitting, by the server, the video data at a time point corresponding to a preset duration each time the server acquires video data with the preset duration during the process of acquiring target video; transcoding the split video data to obtain a low code-rate video data segment; and sending the segment to the terminal.

Optionally, after the performing, by the server, non-linear editing on the video data of the target video in response to a video editing request, if the video editing request for the target video sent by the terminal is received, the process further includes: sending, by the server, the edited low code-rate video data to the terminal.

Optionally, the performing, by the server, non-linear editing on the video data of the target video in response to a video editing request, if the video editing request for the target video sent by the terminal is received further includes:
performing, by the server, a cutting process on the video data of the target video according to a cutting start time point and a cutting end time point carried in a cutting request, if the cutting request for the target video sent by the terminal is received;
performing, by the server, a video inserting process on the video data of the target video according to an inserting time point and inserted content information carried in a video inserting request, if the video inserting request for the target video sent by the terminal is received;
performing, by the server, an upper layer picture adding process on the video data of the target video according to the adding location information and added picture content information carried in an upper layer picture adding request, if the upper layer picture adding request for the target video sent by the terminal is received; and
performing, by the server, a partial blurring process on the video data of the target video according to blurring location information carried in a partial blurring request, if the partial blurring request for the target video sent by the terminal is received.

In the embodiment of the present disclosure, a terminal sends a video acquisition request for a target video to a server. The server acquires video data of the target video from a live stream of the target video in response to the video acquisition request, and stores the acquired target video data. The terminal sends a video editing request for the target video to the server. The server performs non-linear editing on the video data of the target video in response to the video editing request, and stores the edited video data as video-on-demand data of the target video. Therefore, in switching from a video live stream to video-on-demand data, editing process is performed by the server, and thus video-on-demand data needs not to be uploaded to the server by the terminal, thereby saving the time of uploading video-on-demand data to a server and improving the efficiency of switching from a video live stream to video-on-demand data.

### Seventh Embodiment

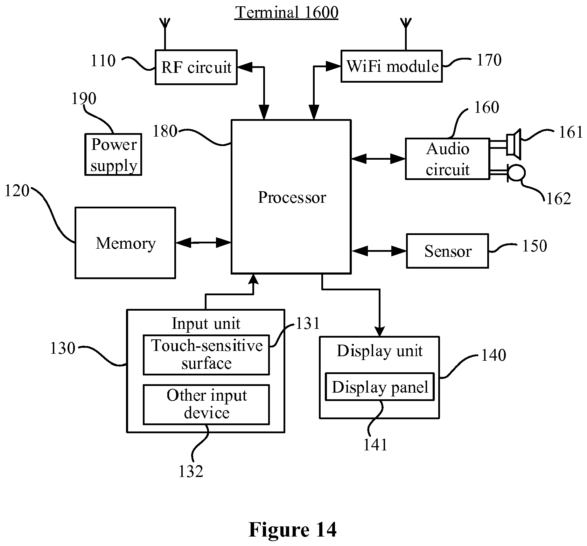

A structural diagram of a terminal provided in the embodiment of the present disclosure is shown in Figure 14. The terminal may be used to implement the method provided in the above embodiments.

A terminal 1600 may include: a radio frequency (RF) circuit 110, a memory 120 including one or more computer-readable storage mediums, an input unit 130, a display unit 140, a sensor 150, an audio circuit 160, a wireless fidelity (WiFi) module 170, a processor 180 including one or more or more than one processing cores and a power supply 190, etc. It can be understood by those skilled person in the art, the terminal is not limited by the structure of a terminal shown in Figure 14, which may include more or less components than the terminal in the figure, or a combination of some components, or have different arrangements of components.

The RF circuit 110 may be configured to receive and send a signal during a process of receiving and sending information or during a call, particularly to receive downlink information of a base station and deliver it to one or more processors 180 for processing, and send related uplink data to a base station. Generally, the RF circuit includes but is not limited to an antenna, at least one amplifier, a tuner, one or more oscillators, a subscriber identity module (SIM) card, a transceiver, a coupler, a low noise amplifier (LNA) and a duplexer, etc. Additionally, the RF circuit 110 can also communicate with a network or other devices through wireless communications. The wireless communications may be performed with any communication standard or protocol, including but not limited to Global System of Mobile communication(GSM), General Packet Radio Service(GPRS), Code Division Multiple Access(CDMA), Wideband Code Division Multiple Access(WCDMA), Long Term Evolution(LTE), Email and Short Messaging Service(SMS), etc.

The memory 120 may be configured to store software programs and modules. By running software programs and modules stored in the memory 120, the processor 180 may execute all kinds of functions, applications and data processing. The memory 120 may mainly include a program memory area and a data memory area. The program memory area may store an operating system and an application program required by at least one function (such as an audio playing function, an image displaying function or the like), etc. The data memory area and store data (such as audio data, a phonebook or the like) created during the use of the terminal 1600. Moreover, the memory 120 may include a high-speed random access memory or a non-volatile memory as well, for example, at least one disk memory, a flash memory or other volatile solid-state memory. Accordingly, the memory 120 may also include a memory controller to provide access to the memory 120 by the processor 180 and the input unit 130.

The input unit 130 may be configured to receive an input figure or character information, and generate a signal inputted by a keyboard, mouse, operating lever, optical or trackball which is relevant to user settings and function control. Specifically, the input unit 130 may include a touch-sensitive surface 131 and other input device 132. The touch-sensitive surface 131 is also referred to as a touch screen or a touchpad, for collecting touch operation thereon or nearby performed by a user (such as operation on a touch-sensitive surface 131 or near a touch-sensitive surface 131 performed by a user through fingers, a touch pen and any other suitable objects or accessories) and driving a corresponding a connected device based on a presetting. Optionally, the touch-sensitive surface 131 may include a touch detection device and a touch controller. The touch detection device is configured to detect a touch position of a user and a signal created by a touch operation, and send the signal to a touch controller. The touch controller is configured to receive touch information from a touch detection device and transform it to a touch spot coordinate, send the touch spot coordinate to the processor 180, and receive a command sent from the processor 180 and execute the command. Additionally, the touch-sensitive surface may be implemented in multiple types such as a resistance type, a capacitance type, an infrared type and a surface acoustic wave type, etc. The input unit 130 may also include other input device 132 in addition to the touch-sensitive surface 131, and specifically, the other input device 132 may include but be not limited to one or more of a physical keyboard, a functional key (such as a volume control key, an on/off key or the like), a trackball, a mouse and an operating lever, etc.

The display unit 140 may be configured to display information inputted by a user, or information provided to a user and all kinds of graphic user interfaces of a terminal 1200; the graphic user interfaces may be constituted by a graph, a text, an icon, a video and any combinations of them. A display unit 140 may include a display panel 141, and optionally, the display panel 141 may be configured with a liquid crystal display (LCD), an organic light-emitting diode (OLED) or the like. Furthermore, the touch-sensitive surface 131 may be covered by a display panel 141. When the touch-sensitive surface 131 detects a touch operation on it or nearby, the touch-sensitive surface 131 sends the touch operation to the processor 180 to determine a type of the touch event, afterwards, the processor 180 provides a corresponding vision output on the display panel 141 according to the type of the touch event. Although in Figure 14, the touch-sensitive surface 131 and the display panel 141 are two independent components to realize input and output functions, in some embodiments, the touch-sensitive surface 131 and the display panel 141 may be integrated to realize input and output functions.

The terminal 1600 may also include at least one kind of sensors 150, such as an optical sensor, a movement sensor and other sensors. Specifically, the optical sensor may include an ambient light sensor and a proximity sensor. The ambient light sensor can adjust the brightness of the display panel 141 according to ambient light, and the proximity sensor can shut off the display panel 141 and/or backlight when the terminal 1600 moves to one's ears. As a kind of movement sensors, a gravity acceleration sensor can detect a magnitude of the acceleration in any direction (tri-axial directions generally), and when the movement sensor is not moved, it can detect a magnitude and direction of gravity, which can be used for an application recognizing a mobile phone gesture (such as a landscape/portrait mode switching, a relevant game and magnetometer posture calibration), or functions related to vibration recognition (such as a pedometer or knock recognition), or the like. For other sensors which may be configured to the terminal 1600, such as a gyroscope, barometer, hygrometer, thermometer, infrared sensor or the like, detailed descriptions are not made here for simplicity.

The audio circuit 160, a loudspeaker 161 and a microphone 162 can provide an audio interface between a user and a terminal 1600. The audio circuit 160 can transmit a received electric signal, which is transformed from audio data, to a loudspeaker 161, and the loudspeaker 161 transforms the electric signal to a sound signal and output it. On the other hand, a microphone 162 transforms a collected sound signal to an electric signal, and the electric signal is received and transformed to audio data by the audio circuit 160. The audio data is outputted to the processor 180 and is processed by the processor 180. Then the processed audio data is sent to a device like another terminal through the RF circuit 110, or the audio data is outputted to a memory 120 for further processing. The audio circuit 160 may also include an earplug jack to provide a communication between a peripheral headphone and the terminal 1600.

WiFi is a short distance wireless transmission technology. The terminal 1600 can enable a user to receive and send an email, browse a website and visit streaming media, etc. through the WiFi module 170, since the WiFi module 170 provides wireless broadband internet access. Although the WiFi module 170 is shown in Figure 14, it can be understood that, the WiFi module 170 is not a necessary component of the terminal 1600 and it can be omitted as required without changing the nature of the present disclosure.

The processor 180 is a control center of the terminal 1600, which is configured to couple all parts of a whole mobile phone by using all kinds of interfaces and circuits, and to execute all kinds of functions and data processing of the terminal 1600 by running or executing software programs and/or modules stored in the memory 120 and calling data stored in the memory 120, to perform an overall monitoring on a mobile phone. Optionally, the processor 180 may include one or more processing cores. Preferably, an application processor and a modulation-demodulation processor may be integrated into the processor 180. The application processor mainly processes an operating system, a user interface, an application program or the like, while the modulation-demodulation processor mainly processes a wireless communication. It can be understood that, the modulation-demodulation processor may not be integrated into the processor 180.

The terminal 1600 further includes the power supply 190 (a battery for example) to supply power to all components. Preferably, the power supply may be logically connected to the processor 180 through a power management system to realize functions of charge management, discharge management and power management, etc. The power supply 190 may also include one or more DC or AC power supplies, a recharging system, a power failure detection circuit, a power converter or inverter, a power status indicator and any other components.

Although not shown in the figure, the terminal 1600 may also include a camera and a blue-tooth module, etc., which are not described here for simplicity. Specifically, in this embodiment, a display unit of the terminal 1600 is a touch-screen display. The terminal 1600 further includes a memory and one or more programs. The one or more programs are stored in the memory, and are executed by one or more processors, to perform a process including the following operations:
sending a video acquisition request for the target video to the server, such that the server acquires video data of the target video from a live stream of the target video in response to the video acquisition request and stores the acquired video data of the target video; and
sending a video editing request for the target video to the server when an inputted video editing instruction is detected, such that the server performs non-linear editing on the video data of the target video in response to the video editing request and stores the edited video data as video-on-demand data of the target video.

Optionally, the processing further includes:
receiving, by the terminal, low code-rate video data of the target video sent by the server and playing the low code-rate video data.

The sending a video editing request for the target video to the server when an inputted video editing instruction is detected by the terminal includes: sending, by the terminal, the video editing request for the target video to the server when the terminal detects a video editing instruction triggered by an operation performed on the low code-rate video data.

Optionally, after the sending, by the terminal, a video editing request for the target video to the server when it detects a video editing instruction triggered by an operation performed on the low code-rate video data, the processing further includes:
receiving edited low code-rate video data sent by the server and playing the edited low code-rate video data; and
sending an editing completion request for the target video to the server when an inputted editing completion instruction is detected by the terminal.

In the embodiment of the present disclosure, a terminal sends a video acquisition request for a target video to a server. The server acquires video data of the target video from a live stream of the target video in response to the video acquisition request, and stores the acquired target video data. The terminal sends a video editing request for the target video to the server. The server performs non-linear editing on the video data of the target video in response to the video editing request; and stores the edited video data as video-on-demand data of the target video. Therefore, in switching from a video live stream to video-on-demand data, editing process is performed by the server, and thus video-on-demand data needs not to be uploaded to the server by the terminal, thereby saving the time of uploading video-on-demand data to a server and improving the efficiency of switching from a video live stream to video-on-demand data.

For another example, low code-rate video data may be edited on the terminal. In this case, the terminal may also perform editing operation on the received low code-rate video data, and record operation information of all non-linear editing and related information (for example, a cutting start time point and a cutting end time point, an inserting time point and inserted content information, adding location information and added picture content information, etc.) corresponding to each piece of operation information. When the editing is completed, a technician may preview the edited low code-rate video data, and click the editing completion button shown on the interface to trigger the terminal to send a video editing request for the target video to the server. The video editing request is sent to the server, and carries a target video identifier, operation information of all non-linear editing of the low code-rate video data and corresponding related information recorded by the terminal. When the server receives the video editing request for the target video sent by the terminal, the server may analyze the video editing request, acquire the target video identifier, the operation information of all non-linear editing of low code-rate video data and the corresponding related information carried in it; and perform the same non-linear editing on the video data of the target video in response to the target video identifier, the operation information of all non-linear editing of low code-rate video data and the corresponding related information.

It should be understood by those skilled in the art that all or a part of steps in multiple methods of the above embodiments may be implemented by hardware, or by a program instructing related hardware. And the program may be stored in a computer readable storage medium such as a ROM, a magnetic disk or an optical disk.

The described embodiments are merely preferred embodiments of the disclosure. The embodiments are not intended to limit the disclosure.

## Claims

1. A method for switching from a video live stream to video-on-demand data applied in a server (1900), wherein the method comprises:
receiving, by the server (1900), a video acquisition request for a target video sent by a terminal (1600);
acquiring, by the server (1900), video data of the target video from a live stream of the target video in response to the video acquisition request, and storing the acquired video data of the target video;
performing, by the server (1900), non-linear editing on the video data of the target video in response to a video editing request when the video editing request for the target video sent by the terminal (1600) is received; and
storing the edited video data as video-on-demand data of the target video,
wherein the method further comprises:
transcoding, by the server (1900), the video data of the target video to obtain low code-rate video data, and sending the low code-rate video data to the terminal (1600);
and wherein the performing, by the server (1900), non-linear editing on the video data of the target video in response to a video editing request when the video editing request for the target video sent by the terminal (1600) is received comprises:
performing, by the server (1900), non-linear editing on the low code-rate video data in response to the video editing request when the video editing request for the target video sent by the terminal (1600) is received; and
sending the edited low code-rate video data to the terminal (1600).

2. The method according to claim 1, wherein the transcoding, by the server (1900), the video data of the target video to obtain low code-rate video data, and sending the low code-rate video data to the terminal (1600) comprises:
splitting, by the server (1900), the acquired video data of the target video based on a preset duration during the process of acquiring video data of the target video;
transcoding the split video data to obtain a low code-rate video data segment; and
sending the low code-rate video data segment to the terminal (1600).

3. The method according to claim 1, after sending by the server (1900) the edited low code-rate video data to the terminal (1600), the method further comprises:
performing, by the server (1900), non-linear editing on the video data of the target video based on all non-linear editing performed on the low code-rate video data when an editing completion request for the target video sent by the terminal (1600) is received.

4. The method according to any one of claims 1-3, wherein the performing non-linear editing on the video data comprises:
performing, by the server (1900), a cutting process on the video data according to a cutting start time point and a cutting end time point carried in a cutting request, if the video editing request received from the terminal (1600) comprises the video cutting request for the target video;
performing, by the server (1900), a video inserting process on the video data according to an inserting time point and inserted content information carried in a video inserting request, if the video editing request received from the terminal (1600) comprises the video inserting request for the target video;
performing, by the server (1900), an upper layer picture adding process on the video data according to adding location information and added picture content information carried in an upper layer picture adding request, if the video editing request received from the terminal (1600) comprises the upper layer picture adding request for the target video; and
performing, by the server (1900), a partial blurring process on the video data according to blurring location information carried in a partial blurring request, if the video editing request received from the terminal (1600) comprises the partial blurring request for the target video.

5. A method for switching from a video live stream to video-on-demand data applied in a terminal (1600), wherein the method comprises:
sending, by the terminal (1600), a video acquisition request for a target video to a server (1900), wherein the server (1900) acquires video data of the target video from a live stream of the target video in response to the video acquisition request and stores the acquired video data of the target video; and
sending, by the terminal (1600), a video editing request for the target video to the server (1900) when an inputted video editing instruction is detected by the terminal (1600), wherein the server (1900) performs non-linear editing on the video data of the target video in response to the video editing request and stores the edited video data as video-on-demand data of the target video,
wherein the method further comprises:
receiving, by the terminal (1600), low code-rate video data of the target video sent by the server (1900), and playing the low code-rate video data,
wherein the sending, by the terminal (1600), a video editing request for the target video to the server (1900) when an inputted video editing instruction is detected by the terminal (1600) comprises: sending, by the terminal (1600), the video editing request for the target video to the server (1900) when the terminal (1600) detects the video editing instruction triggered by an operation performed on the low code-rate video data.

6. The method according to claim 5, further comprising:
receiving edited low code-rate video data sent by the server (1900) and playing the edited low code-rate video data; and
sending an editing completion request for the target video to the server (1900) when an inputted editing completion instruction is detected by the terminal (1600).

7. The method according to claim 5, further comprising:
receiving, by the terminal (1600), low code-rate video data of the target video sent by the server (1900);
editing the received low code-rate video data;
recording operating information of non-linear editing and related information corresponding to each piece of the operating information; and
sending the video editing request for the target video to the server (1900).

8. The method according to claim 7, wherein the video editing request carries a target video identifier, operating information of all non-linear editing of the low code-rate video data and corresponding related information recorded by a terminal (1600), wherein the server (1900) analyzes the video editing request received from the terminal (1600) and performs non-linear editing on the video data of the target video.

9. A server (1900) for switching from a video live stream to video-on-demand data, wherein the server (1900) comprises:
a receiving module (710), configured to receive a video acquisition request for a target video sent by a terminal (1600);
an acquiring module, configured to acquire video data of the target video from a live stream of the target video in response to the video acquisition request;
an editing module (730), configured to perform non-linear editing on the video data of the target video in response to a video editing request when the video editing request for the target video sent by the terminal (1600) is received through the receiving module (710); and
a storing module (740), configured to store the video data of the target video acquired by the acquiring module and store the edited video data as video-on-demand data of the target video,
wherein the server (1900) further comprises:
a transcoding module (750), configured to transcode the video data of the target video to obtain low code-rate video data and send the low code-rate video data to the terminal (1600),
wherein the editing module (730) is further configured to perform non-linear editing on the low code-rate video data in response to the video editing request when the video editing request for the target video sent by the terminal (1600) is received, and send the edited low code-rate video data to the terminal (1600).

10. A system for switching from a video live stream to video-on-demand data, comprising:
a server (1900), configured to perform the method according to claim 1; and
a terminal (1600), connected to the server (1900) and configured to perform the method according to claim 5.

## Patentansprüche

1. Verfahren zum Umschalten von einem Video-Live-Strom auf Video-on-Demand-Daten, das in einem Server (1900) angewendet wird, wobei das Verfahren umfasst:
Empfangen, durch den Server (1900), einer Videoerfassungsanforderung für ein Zielvideo, die von einem Endgerät (1600) gesendet wurde;
Erfassen, durch den Server (1900), von Videodaten des Zielvideos aus einem Live-Strom des Zielvideos in Reaktion auf die Videoerfassungsanforderung, und Speichern der erfassten Videodaten des Zielvideos;
Durchführen, durch den Server (1900), eines nicht-linearen Bearbeitens auf den Videodaten des Zielvideos in Reaktion auf eine Videobearbeitungsanforderung, wenn die Videobearbeitungsanforderung für das Zielvideo, die von dem Endgerät (1600) gesendet wurde, empfangen wird; und
Speichern der bearbeiteten Videodaten als Video-on-Demand-Daten des Zielvideos,
wobei das Verfahren des Weiteren umfasst:
Transcodieren, durch den Server (1900), der Videodaten des Zielvideos, um Videodaten mit niedriger Coderate zu erhalten, und Senden der Videodaten mit niedriger Code-rate an das Endgerät (1600);
und wobei das Durchführen, durch den Server (1900), eines nicht-linearen Bearbeitens auf den Videodaten des Zielvideos in Reaktion auf eine Videobearbeitungsanforderung, wenn die Videobearbeitungsanforderung für das Zielvideo, die von dem Endgerät (1600) gesendet wurde, empfangen wird, umfasst:
Durchführen, durch den Server (1900), eines nicht-linearen Bearbeitens auf den Videodaten mit niedriger Coderate in Reaktion auf die Videobearbeitungsanforderung, wenn die Videobearbeitungsanforderung für das Zielvideo, die von dem Endgerät (1600) gesendet wurde, empfangen wird; und
Senden der bearbeiteten Videodaten mit niedriger Coderate an das Endgerät (1600).

2. Verfahren nach Anspruch 1, wobei das Transcodieren, durch den Server (1900), der Videodaten des Zielvideos, um Videodaten mit niedriger Coderate zu erhalten, und das Senden der Videodaten mit niedriger Coderate an das Endgerät (1600) umfassen:
Aufteilen, durch den Server (1900), der erfassten Videodaten des Zielvideos basierend auf einer voreingestellten Dauer während des Prozesses des Erfassens von Videodaten des Zielvideos;
Transcodieren der aufgeteilten Videodaten, um ein Videodatensegment mit niedriger Coderate zu erhalten; und
Senden des Videodatensegments mit niedriger Coderate an das Endgerät (1600).

3. Verfahren nach Anspruch 1, wobei das Verfahren nach dem Senden, durch den Server (1900), der bearbeiteten Videodaten mit niedriger Coderate an das Endgerät (1600) des Weiteren umfasst:
Durchführen, durch den Server (1900), eines nicht-linearen Bearbeitens auf den Videodaten des Zielvideos, basierend auf allen nicht-linearen Bearbeitungsvorgängen, die auf den Videodaten mit niedriger Coderate durchgeführt wurden, wenn eine Bearbeitungsabschlussanforderung für das Zielvideo, die von dem Endgerät (1600) gesendet wurde, empfangen wird.

4. Verfahren nach einem der Ansprüche 1 bis 3, wobei das Durchführen eines nicht-linearen Bearbeitens auf den Videodaten umfasst:
Durchführen, durch den Server (1900), eines Schneidevorgangs auf den Videodaten gemäß einem Schneidestartzeitpunkt und einem Schneideendzeitpunkt, die in einer Schneideanforderung enthalten sind, falls die Videobearbeitungsanforderung, die von dem Endgerät (1600) empfangen wird, die Videoschneideanforderung für das Zielvideo umfasst;
Durchführen, durch den Server (1900), eines Videoeinfügungsprozesses auf den Videodaten gemäß einem Einfügungszeitpunkt und eingefügten Inhaltsinformationen, die in einer Videoeinfügungsanforderung enthalten sind, falls die Videobearbeitungsanforderung, die von dem Endgerät (1600) empfangen wird, die Videoeinfügungsanforderung für das Zielvideo umfasst;
Durchführen, durch den Server (1900), eines Obere-Schicht-Bildhinzufügungsprozesses auf den Videodaten gemäß Hinzufügungsortsinformationen und hinzugefügten Bildinhaltsinformationen, die in einer Obere-Schicht-Bildhinzufügungsanforderung enthalten sind, falls die Videobearbeitungsanforderung, die von dem Endgerät (1600) empfangen wird, die Obere-Schicht-Bildhinzufügungsanforderung für das Zielvideo umfasst; und
Durchführen, durch den Server (1900), eines teilweisen Verwischungsprozesses auf den Videodaten gemäß Verwischungsortsinformationen, die in einer Teilweise-Verwischungsanforderung enthalten sind, falls die Videobearbeitungsanforderung, die von dem Endgerät (1600) empfangen wird, die Teilweise-Verwischungsanforderung für das Zielvideo umfasst.

5. Verfahren zum Umschalten von einem Video-Live-Strom auf Video-on-Demand-Daten, das in einem Endgerät (1600) angewendet wird, wobei das Verfahren umfasst:
Senden, durch das Endgerät (1600), einer Videoerfassungsanforderung für ein Zielvideo an einen Server (1900), wobei der Server (1900) Videodaten des Zielvideos aus einem Live-Strom des Zielvideos in Reaktion auf die Videoerfassungsanforderung erfasst und die erfassten Videodaten des Zielvideos speichert; und
Senden, durch das Endgerät (1600), einer Videobearbeitungsanforderung für das Zielvideo an den Server (1900), wenn eine eingegebene Videobearbeitungsanweisung durch das Endgerät (1600) detektiert wird, wobei der Server (1900) in Reaktion auf die Videobearbeitungsanforderung eine nicht-lineare Bearbeitung auf den Videodaten des Zielvideos durchführt und die bearbeiteten Videodaten als Video-on-Demand-Daten des Zielvideos speichert,
wobei das Verfahren des Weiteren umfasst:
Empfangen, durch das Endgerät (1600), von Videodaten mit niedriger Coderate des Zielvideos, die von dem Server (1900) gesendet wurden, und Abspielen der Videodaten mit niedriger Coderate,
wobei das Senden, durch das Endgerät (1600), einer Videobearbeitungsanforderung für das Zielvideo an den Server (1900), wenn eine eingegebene Videobearbeitungsanweisung durch das Endgerät (1600) detektiert wird, umfasst: Senden, durch das Endgerät (1600), der Videobearbeitungsanforderung für das Zielvideo an den Server (1900), wenn das Endgerät (1600) die Videobearbeitungsanweisung detektiert, die durch eine Operation ausgelöst wird, die auf den Videodaten mit niedriger Coderate durchgeführt wird.

6. Verfahren nach Anspruch 5, des Weiteren umfassend:
Empfangen von bearbeiteten Videodaten mit niedriger Coderate, die von dem Server (1900) gesendet wurden, und Abspielen der bearbeiteten Videodaten mit niedriger Coderate; und
Senden einer Bearbeitungsabschlussanforderung für das Zielvideo an den Server (1900), wenn eine eingegebene Bearbeitungsabschlussanweisung durch das Endgerät (1600) erkannt wird.

7. Verfahren nach Anspruch 5, des Weiteren umfassend:
Empfangen, durch das Endgerät (1600), von Videodaten mit niedriger Coderate des Zielvideos, die von dem Server (1900) gesendet wurden;
Bearbeiten der empfangenen Videodaten mit niedriger Coderate;
Aufzeichnen von Betriebsinformationen der nicht-linearen Bearbeitung und zugehöriger Informationen, die zu jedem Stück der Betriebsinformationen korrespondieren; und
Senden der Videobearbeitungsanforderung für das Zielvideo an den Server (1900).

8. Verfahren nach Anspruch 7, wobei die Videobearbeitungsanforderung einen Zielvideo-Identifizierer, Betriebsinformationen aller nicht-linearen Bearbeitungsvorgänge der Videodaten mit niedriger Coderate und korrespondierende zugehörige Informationen, die von einem Endgerät (1600) aufgezeichnet wurden, enthält, wobei der Server (1900) die Videobearbeitungsanforderung, die von dem Endgerät (1600) empfangen wird, analysiert und eine nicht-lineare Bearbeitung auf den Videodaten des Zielvideos durchführt.

9. Server (1900) zum Umschalten von einem Video-Live-Strom auf Video-on-Demand-Daten, wobei der Server (1900) umfasst:
ein Empfangsmodul (710), das konfiguriert ist, um eine Videoerfassungsanforderung für ein Zielvideo, die von einem Endgerät (1600) gesendet wurde, zu empfangen;
ein Erfassungsmodul, das konfiguriert ist, um in Reaktion auf die Videoerfassungsanforderung Videodaten des Zielvideos aus einem Live-Strom des Zielvideos zu erfassen;
ein Bearbeitungsmodul (730), das konfiguriert ist, um in Reaktion auf eine Videobearbeitungsanforderung eine nicht-lineare Bearbeitung der Videodaten des Zielvideos durchzuführen, wenn die Videobearbeitungsanforderung für das Zielvideo, die von dem Endgerät (1600) gesendet wurde, über das Empfangsmodul (710) empfangen wird; und
ein Speichermodul (740), das konfiguriert ist, um die Videodaten des Zielvideos, die von dem Erfassungsmodul erfasst wurden, zu speichern und um die bearbeiteten Videodaten als Video-on-Demand-Daten des Zielvideos zu speichern,
wobei der Server (1900) des Weiteren umfasst:
ein Transcodierungsmodul (750), das konfiguriert ist, um die Videodaten des Zielvideos zu transcodieren, um Videodaten mit niedriger Coderate zu erhalten, und um die Videodaten mit niedriger Coderate an das Endgerät (1600) zu senden,
wobei das Bearbeitungsmodul (730) des Weiteren konfiguriert ist, um in Reaktion auf die Videobearbeitungsanforderung eine nicht-lineare Bearbeitung auf den Videodaten mit niedriger Coderate durchzuführen, wenn die Videobearbeitungsanforderung für das Zielvideo, die von dem Endgerät (1600) gesendet wurde, empfangen wird, und um die bearbeiteten Videodaten mit niedriger Coderate an das Endgerät (1600) zu senden.

10. System zum Umschalten von einem Video-Live-Strom auf Video-on-Demand-Daten, umfassend:
einen Server (1900), der konfiguriert ist, um das Verfahren nach Anspruch 1 durchzuführen; und
ein Endgerät (1600), das mit dem Server (1900) verbunden und konfiguriert ist, um das Verfahren nach Anspruch 5 durchzuführen.

## Revendications

1. Procédé pour passer d'un flux vidéo en direct à des données vidéo à la demande qui est appliqué dans un serveur (1900), dans lequel le procédé comprend:
recevoir, par le serveur (1900), une demande d'acquisition vidéo pour une vidéo cible, qui a été envoyée par un terminal (1600);
acquérir, par le serveur (1900), des données vidéo de la vidéo cible à partir d'un flux en direct de la vidéo cible en réponse à la demande d'acquisition vidéo, et stocker les données vidéo acquises de la vidéo cible;
effectuer, par le serveur (1900), un montage non linéaire sur les données vidéo de la vidéo cible en réponse à une demande de montage vidéo lorsque la demande de montage vidéo pour la vidéo cible, qui a été envoyée par le terminal (1600) est reçue; et
stocker les données vidéo éditées en tant que données vidéo à la demande de la vidéo cible,
dans lequel le procédé comprend en outre:
transcoder, par le serveur (1900), les données vidéo de la vidéo cible pour obtenir des données vidéo à faible débit de code, et envoyer les données vidéo à faible débit de code au terminal (1600);
et dans lequel l'action consistant à effectuer, par le serveur (1900), un montage non linéaire sur les données vidéo de la vidéo cible en réponse à une demande de montage vidéo lorsque la demande de montage vidéo pour la vidéo cible, qui a été envoyée par le terminal (1600) est reçue comprend:
effectuer, par le serveur (1900), un montage non linéaire sur les données vidéo à faible débit de code en réponse à la demande de montage vidéo lorsque la demande de montage vidéo pour la vidéo cible, qui a été envoyée par le terminal (1600) est reçue; et
envoyer au terminal (1600) les données vidéo à faible débit de code éditées.

2. Procédé selon la revendication 1, dans lequel le transcodage, par le serveur (1900), des données vidéo de la vidéo cible pour obtenir des données vidéo à faible débit de code, et l'envoi des données vidéo à faible débit de code au terminal (1600) comprend:
diviser, par le serveur (1900), les données vidéo acquises de la vidéo cible sur la base d'une durée prédéfinie pendant le processus d'acquisition des données vidéo de la vidéo cible;
transcoder les données vidéo divisées pour obtenir un segment de données vidéo à faible débit de code; et
envoyer au terminal (1600) le segment de données vidéo à faible débit de code.

3. Procédé selon la revendication 1, dans lequel, après avoir envoyé au terminal (1600), par le serveur (1900), les données vidéo à faible débit de code éditées, le procédé comprend en outre:
effectuer, par le serveur (1900), un montage non linéaire sur les données vidéo de la vidéo cible sur la base de tous les montages non linéaires effectués sur les données vidéo à faible débit de code lorsqu'une demande d'achèvement de montage pour la vidéo cible, qui a été envoyée par le terminal (1600) est reçue.

4. Procédé selon l'une quelconque des revendications 1 à 3, dans lequel l'action consistant à effectuer un montage non linéaire sur les données vidéo comprend:
effectuer, par le serveur (1900), un processus de découpe sur les données vidéo en fonction d'un instant de début de découpe et d'un instant de fin de découpe contenus dans une demande de découpe, si la demande de montage vidéo reçue du terminal (1600) comprend la demande de découpe vidéo pour la vidéo cible;
effectuer, par le serveur (1900), un processus d'insertion vidéo sur les données vidéo en fonction d'un instant d'insertion et d'informations de contenu insérées contenues dans une demande d'insertion vidéo, si la demande de montage vidéo reçue du terminal (1600) comprend la demande d'insertion vidéo pour la vidéo cible;
effectuer, par le serveur (1900), un processus d'ajout d'image de couche supérieure sur les données vidéo en fonction d'informations d'emplacement d'ajout et d'informations de contenu d'image ajoutées contenues dans une demande d'ajout d'image de couche supérieure, si la demande de montage vidéo reçue du terminal (1600) comprend la demande d'ajout d'image de couche supérieure pour la vidéo cible; et
effectuer, par le serveur (1900), un processus de floutage partiel sur les données vidéo en fonction d'informations d'emplacement de floutage contenues dans une demande de floutage partiel, si la demande de montage vidéo reçue du terminal (1600) comprend la demande de floutage partiel pour la vidéo cible.

5. Procédé pour passer d'un flux vidéo en direct à des données vidéo à la demande qui est appliqué dans un terminal (1600), dans lequel le procédé comprend:
envoyer, par le terminal (1600), une demande d'acquisition vidéo pour une vidéo cible à un serveur (1900), dans lequel le serveur (1900) acquiert des données vidéo de la vidéo cible à partir d'un flux en direct de la vidéo cible en réponse à la demande d'acquisition vidéo et stocke les données vidéo acquises de la vidéo cible; et
envoyer, par le terminal (1600), une demande de montage vidéo pour la vidéo cible au serveur (1900) lorsqu'une instruction de montage vidéo entrée est détectée par le terminal (1600), dans lequel le serveur (1900) effectue un montage non linéaire sur les données vidéo de la vidéo cible en réponse à la demande de montage vidéo et stocke les données vidéo éditées en tant que données vidéo à la demande de la vidéo cible,
dans lequel le procédé comprend en outre:
recevoir, par le terminal (1600), des données vidéo à faible débit de code de la vidéo cible, qui ont été envoyées par le serveur (1900), et lire les données vidéo à faible débit de code,
dans lequel l'action consistant à envoyer au serveur (1900), par le terminal (1600), une demande de montage vidéo pour la vidéo cible lorsqu'une instruction de montage vidéo entrée est détectée par le terminal (1600) comprend: envoyer au serveur (1900), par le terminal (1600), la demande de montage vidéo pour la vidéo cible lorsque le terminal (1600) détecte l'instruction de montage vidéo déclenchée par une opération effectuée sur les données vidéo à faible débit de code.

6. Procédé selon la revendication 5, comprenant en outre:
recevoir des données vidéo à faible débit de code éditées envoyées par le serveur (1900) et lire les données vidéo à faible débit de code éditées; et
envoyer au serveur (1900) une demande d'achèvement de montage pour la vidéo cible lorsqu'une instruction d'achèvement de montage entrée est détectée par le terminal (1600).

7. Procédé selon la revendication 5, comprenant en outre:
recevoir, par le terminal (1600), des données vidéo à faible débit de code de la vidéo cible, qui ont été envoyées par le serveur (1900);
éditer les données vidéo à faible débit de code reçues;
enregistrer des informations d'opération de montage non linéaire et des informations associées correspondant à chaque pièce des informations d'opération; et
envoyer au serveur (1900) la demande de montage vidéo pour la vidéo cible.

8. Procédé selon la revendication 7, dans lequel la demande de montage vidéo contient un identifiant de vidéo cible, des informations d'opération de tous les montages non linéaires des données vidéo à faible débit de code et des informations associées correspondantes enregistrées par un terminal (1600), dans lequel le serveur (1900) analyse la demande de montage vidéo reçue du terminal (1600) et effectue un montage non linéaire sur les données vidéo de la vidéo cible.

9. Serveur (1900) pour passer d'un flux vidéo en direct à des données vidéo à la demande, dans lequel le serveur (1900) comprend:
un module de réception (710) configuré pour recevoir une demande d'acquisition vidéo pour une vidéo cible, qui a été envoyée par un terminal (1600);
un module d'acquisition configuré pour acquérir des données vidéo de la vidéo cible à partir d'un flux en direct de la vidéo cible en réponse à la demande d'acquisition vidéo;
un module de montage (730) configuré pour effectuer un montage non linéaire sur les données vidéo de la vidéo cible en réponse à une demande de montage vidéo lorsque la demande de montage vidéo pour la vidéo cible, qui a été envoyée par le terminal (1600) est reçue par le module de réception (710); et
un module de stockage (740) configuré pour stocker les données vidéo de la vidéo cible acquises par le module d'acquisition et pour stocker les données vidéo éditées en tant que données vidéo à la demande de la vidéo cible,
dans lequel le serveur (1900) comprend en outre:
un module de transcodage (750) configuré pour transcoder les données vidéo de la vidéo cible pour obtenir des données vidéo à faible débit de code, et pour envoyer au terminal (1600) les données vidéo à faible débit de code;
dans lequel le module de montage (730) est en outre configuré pour effectuer un montage non linéaire sur les données vidéo à faible débit de code en réponse à la demande de montage vidéo lorsque la demande de montage vidéo pour la vidéo cible, qui a été envoyée par le terminal (1600) est reçue, et pour envoyer au terminal (1600) les données vidéo à faible débit de code éditées.

10. Système pour passer d'un flux vidéo en direct à des données vidéo à la demande, comprenant:
un serveur (1900) qui est configuré pour mettre en œuvre le procédé selon la revendication 1; et
un terminal (1600) qui est connecté au serveur (1900) et configuré pour mettre en œuvre le procédé selon la revendication 5.
